(19) Europäisches Patentamt
European Patent Office
Office européen des brevets

(11) **EP 3 274 135 B1**

(12) **EUROPÄISCHE PATENTSCHRIFT**

(45) Veröffentlichungstag und Bekanntmachung des Hinweises auf die Patenterteilung:
**01.05.2019 Patentblatt 2019/18**

(21) Anmeldenummer: **16711602.9**

(22) Anmeldetag: **21.03.2016**

(51) Int Cl.:
*G05B 11/01* *(2006.01)*    *G05B 19/19* *(2006.01)*
*G05B 23/02* *(2006.01)*    *B25J 9/16* *(2006.01)*
*G05B 19/423* *(2006.01)*

(86) Internationale Anmeldenummer:
**PCT/EP2016/056132**

(87) Internationale Veröffentlichungsnummer:
**WO 2016/150907 (29.09.2016 Gazette 2016/39)**

(54) **ROBUSTES INTUITIVES BEDIENVERFAHREN DURCH BERÜHRUNG EINES MANIPULATORS**

ROBUST INTUITIVE OPERATING METHOD BY TOUCHING A MANIPULATOR

PROCÉDÉ DE FONCTIONNEMENT INTUITIF ROBUSTE PAR COMMANDE TACTILE D'UN MANIPULATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2015 DE 102015205176**

(43) Veröffentlichungstag der Anmeldung:
**31.01.2018 Patentblatt 2018/05**

(73) Patentinhaber: **KUKA Deutschland GmbH 86165 Augsburg (DE)**

(72) Erfinder:
• **SCHREIBER, Günter**
**86316 Friedberg (DE)**
• **PFAFF, Bettina**
**86152 Augsburg (DE)**

(74) Vertreter: **Mader, Joachim**
**Bardehle Pagenberg Partnerschaft mbB**
**Patentanwälte, Rechtsanwälte**
**Prinzregentenplatz 7**
**81675 München (DE)**

(56) Entgegenhaltungen:
**EP-A2- 2 299 344**     **EP-A2- 2 392 435**
**WO-A1-2011/082755**

**Beschreibung**

**1. Technischer Bereich**

Die vorliegende Erfindung betrifft Verfahren zum Steuern eines Manipulators, insbesondere eines Gelenkarmroboters, um eine robuste und intuitive Bedienung des Manipulators sicherzustellen.

**2. Technischer Hintergrund**

Manipulatoren, und insbesondere Gelenkarmroboter sind frei programmierbare, programmgesteuerte Handhabungsgeräte. Der Manipulator kann aus einer Anzahl an beweglichen, aneinander geketteten Gliedern oder auch Achsen bestehen, welche die kinematische Kette des Manipulators definieren. Die kinematische Kette erstreckt sich üblicherweise vom Manipulatorfuß zum Flansch des Manipulators, oder falls vorhanden, zu einem mit dem Flansch verbundenen Werkzeug.

Die Bewegung der einzelnen Achsen eines Manipulators kann dabei durch eine gezielte Regelung von Antrieben erfolgen, welche mit den einzelnen Komponenten des Manipulators verbunden sind. Für eine Bewegung zwischen einzelnen Punkten können während der Programmierung eines Manipulatorprogramms gewisse Parameter, wie beispielsweise die Geschwindigkeit, vorgegeben werden.

Ein bekannter Manipulator und ein zugehöriges Steuerungsverfahren sind in der US-Offenlegungsschrift 2008/0245175 A1 offenbart.

Aus einem betriebsinternen Verfahren ist bekannt, einen Manipulator von Hand zu führen, indem die Bedienperson einen Freigabeschalter betätigt und den Manipulator dann an einem seiner Glieder oder am Flansch bzw. dem mit dem Flansch verbundenen Werkzeug (Endeffektor) anfasst und in die gewünschte Position führt. Dabei wird eine sogenannte Gravitationskompensation genutzt, um den Manipulator intuitiv durch Berührung in gewünschte Positionen zu führen, wobei die interne Momentensensorik des Manipulators genutzt wird. Beispielsweise erfassen die Momentensensoren, wenn eine externe Kraft auf den Manipulator einwirkt. Aufgrund des (Dynamik-)Modells, welches den Aufbau und die Funktion des Manipulators beschreibt, kann die Steuerung des Manipulators erkennen, ob diese wirkende Kraft auf z.B. der Gravitation beruht, welche auf die Glieder des Manipulators einwirkt, ober ob es sich um eine zusätzliche externe Kraft handelt. Erkennt die Steuerung dieses, gibt sie den Manipulator frei und die Bedienperson kann den Manipulator sehr einfach durch Berührung bewegen. Genauer gesagt, erkennt die Manipulatorsteuerung aufgrund der erfassten Kräfte in welche Richtung der Manipulator bewegt werden soll und steuert dementsprechend die Aktoren der jeweiligen Achsen des Manipulators geeignet an, damit sich der Manipulator in die gewünschte Richtung bewegt. Da der Manipulator üblicherweise vollständig freigeschaltet wird, muss jedoch eine Reihe von Maßnahmen ergriffen werden, um ein "Durchgehen" des Manipulators zu verhindern. Die bekannten Maßnahmen sind primär auf die Validierung des Dynamikmodells (z.B. mittels Lastmasse am Flansch und Gravitationsrichtung) beschränkt. Hierbei muss das Antriebsdrehmoment mit dem modellierten Drehmoment bis auf einen vergleichsweise kleinen Fehler übereinstimmen, wie unten näher erläutert werden wird. Weiterhin ist aus der EP 2 392 435 A2 ein Werkstück-Handhabungssystem mit kooperierenden Manipulatoren bekannt, wobei ein erster Manipulator in wenigstens einem seiner Freiheitsgrade zum manuell geführten Bewegen eingerichtet ist und ein zweiter Manipulator in Abhängigkeit des manuell geführten Manipulators automatisch gesteuert wird. Aus der EP 2 299 344 A2 ist eine Eingabevorrichtung zur Eingabe von Steuer- und Programmbefehlen für einen Manipulator bekannt, wobei die Eingabevorrichtung einen Handsteuerhebel aufweist, der von einem Bediener manuell bewegbar ist. Aus der WO 2011/082755 A1 ist ein Verfahren zum Steuern eines Manipulators bekannt, wobei eine Kontaktkraft zwischen dem Manipulator und einem Werkstuck auf Basis tatsächlicher Antriebskräfte und Antriebskräften eines dynamischen Modells des Manipulators erfasst wird. Die bekannten Verfahren bringen in diesem Zusammenhang einige Nachteile mit sich. Einerseits kann es leicht vorkommen, dass der Manipulator durch Modellfehler "driftet". Diese Drift ist im eingangs beschriebenen Verfahren besonders nachteilhaft, da der Manipulator sofort freigegeben wird, sobald eine Zustimmungstaste o.ä. gedrückt wird. Ferner können mit den bekannten Verfahren Verklemmungssituationen (z.B. nach einem Crash) nicht von Modellfehlern unterschieden werden. Würde der Manipulator mit einem so großen Modellfehler, wie er bei einer Verklemmung üblicherweise auftritt, freigegeben werden, würde er sehr hoch beschleunigen, was negative oder gar katastrophale Auswirkungen auf den ausgeführten Arbeitsgang und auch die in unmittelbarer Nähe befindliche Bedienperson haben kann.

Der vorliegenden Erfindung liegt somit die Aufgabe zugrunde, eine Methode bereitzustellen, welche ein besonders robustes Steuern eines Manipulators, insbesondere eines Gelenkarmroboters erlaubt. Es ist ferner eine Aufgabe der vorliegenden Erfindung, eine besonders intuitive Methode zum Steuern eines Manipulators bereitzustellen.

Diese und weitere Aufgaben, welche aus der folgenden detaillierten Beschreibung deutlicher werden, werden durch die Gegenstände der unabhängigen Ansprüche gelöst.

**3. Inhalt der Erfindung**

Die Erfindung umfasst ein Verfahren zum Steuern eines Manipulators, und insbesondere zum Steuern eines Gelenkarmroboters. Das erfindungsgemäße Verfahren umfasst ein Erkennen eines Freigabewunsches basierend auf einer Kraftausübung auf den Manipulator durch eine Bedienperson. Das Verfahren erlaubt einer Bedienperson, den Manipulator händisch durch Anfassen und Führen in die gewünschte Richtung bzw. Position zu verfahren. Durch die damit auf den Manipulator einwirkende Kraft wird erkannt, dass die Bedienperson den Manipulator freigeben bzw. bewegen will, woraufhin der Manipulator erfindungsgemäß freigegeben wird. Folglich wird der Manipulator nur auf Nutzerwunsch hin freigeben und ansonsten vorzugsweise in der aktuellen Position gesperrt bzw. geregelt "eingefroren", d.h. der Manipulator öffnet seine Bremsen und versucht mit aktiven Motoren seine Pose bzw. Position trotz Schwerkraft zu halten. Generell bevorzugt verfügt der Manipulator über geeignete Sensoren, mit denen die auf die Achsen wirkenden Drehmomente erfasst werden können. Als besonders vorteilhaft kommen hier Drehmomentsensoren auf Basis von Dehnungsmessstreifen zum Einsatz, die bspw. an den Achsen des Manipulators eingerichtet sind, wie etwa auf den jeweiligen Antriebswellen der Aktoren der verschiedenen Achsen. Mit Dehnungsmessstreifen können die wirkenden Drehmomente sehr präzise erfasst werden, so dass der Manipulator bereits auf kleinste Kräfte reagieren kann.

Gemäß der Erfindung umfasst das Erkennen des Freigabewunsches ein Überwachen des Verlaufs eines einen Zustand des Manipulators charakterisierenden Messwertes. Im Gegensatz zu bekannten Verfahren, bei welchen lediglich der Modellfehler in Betracht gezogen wird (d.h. die Differenz zwischen modelliertem und gemessenem Drehmoment oder auch die Differenz zwischen kommandierter Sollposition und gemessener Istposition), beruht die Erfindung auf der Erkenntnis, dass durch Berücksichtigen des Messwertverlaufs (d.h. einer zeitlichen Abfolge mehrerer Messwerte) die Robustheit der Nutzerwunscherkennung signifikant erhöht wird.

Das erfindungsgemäße Verfahren erlaubt hierdurch eine Reihe weiterer technischer Vorteile: Einerseits kann der Manipulator auch in Grenzbereichen freigegeben werden (z.B. zum Zwecke der "Crash Recovery"), was mit herkömmlichen Verfahren nicht oder nur schwierig möglich ist. Ferner bietet das erfindungsgemäße Verfahren eine weitaus größere Toleranz bzw. Robustheit bei Modellabweichungen, die in der Praxis üblicherweise auftreten. Auch ein intuitives Programmieren durch Berührungssteuerung (sog. "Teachen") wird ermöglicht, sowie eine verbesserte Driftunterdrückung, was wiederum in einer erhöhten Fehlertoleranz resultiert.

Vorzugsweise umfasst der einen Zustand des Manipulators charakterisierende Messwert ein Drehmoment oder eine Position des Manipulators. Das Erkennen des Freigabewunsches mittels eines Drehmomentverlaufs umfasst vorzugsweise ein Erkennen, dass eine Differenz zwischen einem gemessenen Drehmoment und einem Referenzdrehmoment eine vorgegebene Fehlerschranke betragsmäßig überschreitet, wobei das Referenzdrehmoment durch einen Mittelwert von zuvor gemessenen Drehmomenten berechnet wird, oder durch einen Snapshot-Messwert gebildet wird. Ein "Snapshot-Messwert" entspricht im Prinzip einer Mittelwertbestimmung mit genau einem Messwert, er stellt somit einen Sonderfall der Mittelwertbestimmung mit genau einem Messwert dar. Allerdings ist eine "echte" Mittelwertbildung basierend auf einer Mehrzahl von Werten bevorzugt, da dies zu genaueren Ergebnissen führt.

Das Erkennen basierend auf Positionen des Manipulators umfasst vorzugsweise, dass eine Differenz zwischen einer gemessenen Position und einer Referenzposition eine vorgegebene Fehlerschranke betragsmäßig überschreitet, wobei die Referenzposition durch einen Mittelwert von zuvor gemessenen Positionen berechnet wird, oder wobei die Referenzposition durch einen Snapshot-Messwert gebildet wird.

Das Freigeben des Manipulators umfasst ferner vorzugsweise ein Freigeben mit erhöhter Steifigkeit wenn das Modell ungültig ist, d.h. der Manipulator wird "zäh", also in seiner Beweglichkeit stark eingegrenzt, freigeben, was insbesondere für die "Crash Recovery" vorteilhaft ist, beispielsweise wenn der Manipulator in einen Verklemmungszustand gebracht worden ist. Andernfalls, wenn das Modell gültig ist, wird der Manipulator vorzugsweise vollständig freigegeben.

Vorzugsweise umfasst das erfindungsgemäße Verfahren ferner ein Erkennen eines Sperrwunsches, wenn die Bedienperson den Manipulator für eine vorgegebene Zeitspanne in einer Position festhält und ein Sperren des Manipulators in Reaktion auf das Erkennen des Sperrwunsches.

Die vorliegende Erfindung betrifft des Weiteren ein Verfahren zum Steuern eines Manipulators, insbesondere eines Gelenkarmroboters, welches ein Erkennen eines Freigabewunsches basierend auf einer Kraftausübung auf den Manipulator durch eine Bedienperson, sowie in Reaktion auf das Erkennen des Freigabewunsches ein Bewegen des Manipulators um eine vorgegebene Position und ein anschließendes, vorzugsweise sofortiges, Sperren des Manipulators umfasst. Beispielsweise kann die Bedienperson den Manipulator lediglich antippen und dieser führt sodann eine Bewegung vorbestimmten Ausmaßes in der gewünschten Richtung aus (sog. "Tipp-Betrieb"). Durch das Verfahren können vorteilhafterweise kleine Bewegungen besonders dosiert kommandiert werden, was eine besonders präzise Bedienung des Manipulators und damit ein besonders genaues schrittweises Anfahren einer gewünschten Position erlaubt. Der Fachmann wird erkennen, dass dieses Verfahren unabhängig von oder in Kombination mit dem eingangs angegebenen Verfahren realisiert werden kann.

Das Bewegen des Manipulators kann ein gelenkspezifisches oder kartesisches Anpassen einer Sollposition des Manipulators umfassen. Vorzugsweise umfasst das Verfahren ein automatisches Auswählen des kartesischen Anpassens der Sollposition des Manipulators in Reaktion auf ein Erkennen, dass die Bedienperson den Manipulator an einem Endeffektor berührt ("angetippt") hat. Dieses Erkennen kann ein Auswerten einer Jacobimatrix, insbesondere eine Nullraumbestimmung, umfassen.

Die Bewegungssensitivität, d.h. das Ausmaß der Bewegung, des Manipulators kann mittels eines Verstärkungsparameters einstellbar sein.

Ein erfindungsgemäßes Robotersystem umfasst einen Manipulator, und insbesondere einen Gelenkarmroboter, als auch eine Steuerungseinrichtung. Letztere ist dabei eingerichtet, zumindest eines der erfindungsgemäßen Verfahren zum Steuern eines Manipulators auszuführen. Die Erfindung ist in den unabhängigen Ansprüchen 1 und 12 definiert.

## 4. Ausführungsbeispiele

Im Folgenden wird die vorliegende Erfindung anhand der beiliegenden Figuren näher beschrieben. Es zeigt:

Fig. 1    schematisch einen Momentenverlauf an einer Achse eines Gelenkarmroboters;
Fig. 2    schematisch einen beispielhaften Ablauf eines Verfahrens zum Steuern eines Manipulators, und
Fig. 3    schematisch ein Robotersystem, welches zur Durchführung eines erfindungsgemäßen Verfahrens eingerichtet ist.

Erfindungsgemäß wird im obigen Verfahren der Nutzerwunsch besonders robust erkannt, indem anstelle des Modellfehlers (Differenz zwischen einem modelliertem Drehmoment und einem gemessenen Drehmoment) der Messwertverlauf berücksichtigt wird, was nachfolgend erläutert wird.

Nutzerwunscherkennung

Eine einfache Implementierung der Nutzerwunscherkennung "Freigabe" basiert auf einem gemessenen Drehmoment im Vergleich zu einem modellierten Drehmoment eines internen Dynamikmodells des Manipulators. Ein solches Dynamikmodell wird üblicherweise bestimmt, indem basierend auf dem Gewicht und den geometrischen Abmessungen der Komponenten des Manipulators die Dynamikgleichungen des Manipulators beispielsweise über den Lagrange-Formalismus oder den Newton-Euler-Algorithmus bestimmt werden. Durch das Dynamikmodell kann modelliert werden, welches Drehmoment nötig wäre, um den Manipulator geeignet zu bewegen oder welches Drehmoment bspw. nötig ist, um einen Manipulator gegen die Wirkung der Gravitation in einer vorgegebenen Pose zu halten.

Gemäß der obigen einfachen Implementierung wird der Nutzerwunsch "Freigabe" erkannt, wenn die Differenz ("externes Drehmoment" $\tau_{ext}$) aus einem modelliertem Drehmoment $\tau_{mdl}$ und einem gemessenem Drehmoment $\tau_{msr}$

$$\tau_{ext} = \tau_{msr} - \tau_{mdl}$$

betragsmäßig über einer Fehlerschranke $\varepsilon$ liegt:

$$\left|\tau_{ext}\right| > \varepsilon \quad (1)$$

Dieses Verfahren kann jedoch unter Umständen einen Modellfehler als Nutzerwunsch auffassen. Solche Modellfehler treten in der Praxis zwangsläufig auf, da das Dynamikmodell praktisch nie exakt die reale Welt widerspiegeln kann, unter anderem deshalb, weil die exakte Massenverteilung des Manipulators nur sehr schwer bestimmbar ist und beispielsweise auch das Montieren eines Werkzeugs am Manipulator das Modell je nach Gewicht des Werkzeugs signifikant beeinflusst. In der Praxis hat sich gezeigt, dass die Abweichung zwischen Dynamikmodell und Realität leicht 5-10% betragen kann.

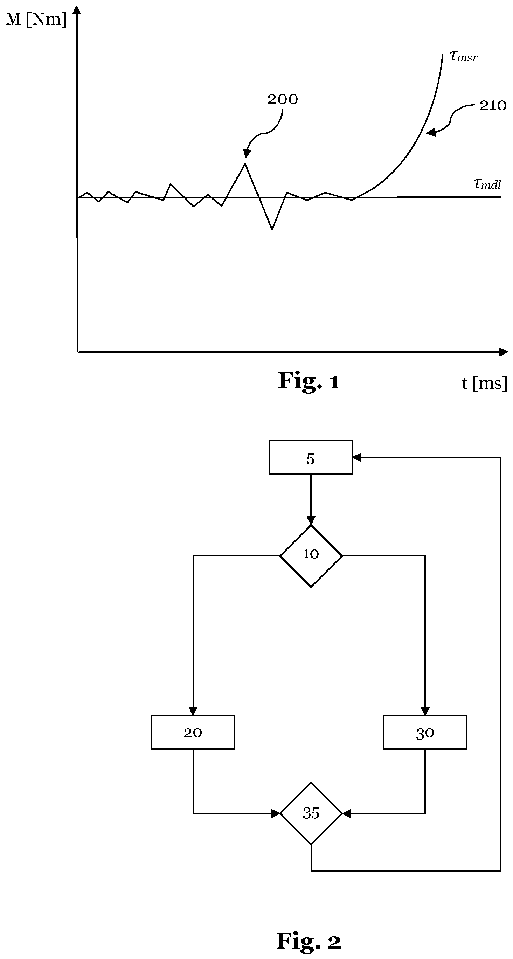

Dies soll anhand Fig. 1 näher erläutert werden. In Fig. 1 ist schematisch und beispielhaft der Drehmomentverlauf über die Zeit gemessen an einer Achse (z.B. Achse 3) eines Manipulators, und zwar eines Gelenkarmroboters gezeigt. Das Drehmoment wird vorzugsweise mit Hilfe von Dehnungsmessstreifen erfasst, die an der Antriebswelle der Achse angeordnet sind. Im ruhenden Betrieb wirkt - einfach ausgedrückt - auf die Antriebswelle der Achse ein konstantes Drehmoment, bedingt durch die Gravitation, die auf die Glieder des Manipulators bzw. Gelenkarmroboters wirkt, die mit der Achse bewegt werden können. Mit $\tau_{mdl}$ ist das für den gegebenen Zustand (Pose) des Manipulators bzw. Gelenkarmroboters modellierte Drehmoment (z.B. hier 30 Nm) in Form einer Geraden dargestellt. Damit der Manipulator aufgrund der Schwerkraft nicht nach unten absackt, muss die Steuerung den Aktor der betroffenen Achse mit einem (Gegen-)Drehmoment von 30 Nm beaufschlagen. Das gemessene Drehmoment $\tau_{msr}$ ist jedoch nie vollständig konstant, sondern schwankt in der Praxis bspw. durch Erschütterungen, die Einbaulage des Manipulators, die vorliegende Last oder andere Umwelteinflüsse, aber insbesondere durch ein unvermeidbares Eigenrauschen der verwendeten Sensoren bzw. Regelungseinrichtungen etc.. Dies ist durch den "zittrigen" Verlauf von $\tau_{msr}$ in Fig. 1 angedeutet. Durch die Vorgabe einer Fehlerschranke $\varepsilon$ sind diese leichten Schwankungen um das modellierte (idealisierte) Drehmoment $\tau_{mdl}$ jedoch unproblematisch. Ohne die Fehlerschranke würde der Manipulator bzw. Gelenkarmroboter bzw. dessen Steuerung jedoch bereits diese leichten Abweichungen von $\tau_{mdl}$, z.B. durch Erschütterungen des Manipulators, als Nutzerwunsch interpretieren und den Manipulator in die durch die externe Kraft vorgegebene Richtung bewegen. Bei Punkt 200 kommt es im abgebildeten Beispiel zu einer größeren Schwankung, die bspw. dadurch entstehen kann, dass ein Gabelstapler nahe am Manipulatorfuß vorbeifährt oder weil ein Bediener gegen den Manipulator stößt. Ein derartiger Stoß kann einen Drehmomentsprung bewirken, der außerhalb der Fehlerschranke liegt, so dass der Manipulator bei Punkt 200 den Drehmomentsprung fälschlich als Nutzerwunsch erkennt.

Um dies zu verhindern wird erfindungsgemäß deshalb der Messwertverlauf von $\tau_{msr}$ insbesondere kontinuierlich, überwacht. Der Messwertverlauf wird dabei bevorzugt beim gesperrten Manipulator ermittelt, sodass $\tau_{msr}$ bis auf ein vergleichsweise kleines Restrauschen denselben Wert behält, wenn der Manipulator ruht. Der Wert von $\tau_{msr}$ verändert sich jedoch stark, wenn die Bedienperson eine Kraft auf den Manipulator ausübt, um diesen manuell zu verfahren. Dies ist bei Punkt 210 in Fig. 1 beispielhaft illustriert. Im gesperrten Zustand wird daher basierend auf dem Verlauf des Messwerts $\tau_{msr}$ ein variabler Referenzwert $\tau_{ref}$ gebildet, welcher die Rolle des modellierten Drehmoments $\tau_{mdl}$ übernimmt. $\tau_{ref}$ wird bevorzugt durch einen Mittelwertfilter kontinuierlich mitgeführt, beispielsweise indem stets die letzten 10 oder 15 Messungen in die Mittelwertbestimmung eingehen:

$$\tau_{ref} = \frac{\sum_i \tau_{msr,i,eingefroren}}{nsamples}$$

Die Nutzerwunscherkennung wird nun analog zu (1) gebildet:

$$\tau_{ext,ref} = \tau_{msr} - \tau_{ref} \quad (2)$$

$$\left| \tau_{ext,ref} \right| > \varepsilon$$

Der Referenzwert ist also nicht fest, sondern wird zu einem gewissen Grad an den tatsächlich gemessenen Drehmomentverlauf angepasst. Durch ein geeignetes Einstellen der Mittelwertbestimmung lässt sich somit verhindern, dass z.B. der Ausschlag bei Punkt 200 als Nutzerwunsch interpretiert wird. Die erheblich größere Kraftbeaufschlagung bei Punkt 210, die durch den Bediener absichtlich erfolgt, wird jedoch richtig als Nutzerwunsch erkannt, und die Steuerung des Manipulators bewegt den Manipulator dann in die vom Bediener vorgegebene Richtung. Wie man sieht, ist die Nutzerwunscherkennung somit unabhängig vom (unsicheren) Dynamikmodell, sondern basiert stattdessen auf der Abweichung eines aktuellen Messwerts von einem gemittelten Messwertverlauf. Die erfindungsgemäße verlaufsbasierte Erkennung des Freigabewunsches bietet unter anderem die folgenden Vorteile: Erstens kann die Fehlerschranke kleiner gewählt werden, da der Modellfehler nicht mehr fälschlicherweise als Nutzerwunsch (Berührung) detektiert wurde, d.h. der Manipulator wird "sensitiver". Zweitens kann der Manipulator selbst in Verklemmungssituationen erst durch menschliche Berührung freigegeben werden, d.h. die Bedienperson kann "intuitiv" den Manipulator gezielt freifahren.

Alternativ kann auch ein einzelner "Snapshot"-Messwert erzeugt werden, der in der Ruhesituation des Manipulators erfasst wird (d.h. die Gelenkgeschwindigkeit und Beschleunigung des Manipulators ist NULL) und dieser wird als Referenzwert $\tau_{ref}$ verwendet.

Analog zu dem oben beschriebenen Drehmoment-basierten Ansatz kann die Nutzerwunscherkennung auch auf Basis von Positionswerten realisiert werden. Anstelle der modellierten Drehmomente und der gemessenen Drehmomente kommen dann modellierte Positionen und gemessene Positionen analog zur Anwendung. Beispielsweise würde die Referenz auf Basis einer Reihe von zuvor gemessenen Positionen bestimmt werden, die hierzu gemittelt werden. Also anstelle einer einfachen Different von einer gemessenen Ist-Position $q_{msr}$ und einer modellierten Soll-Position $q_{mdl}$:

$$q_{delta\_ext} = q_{msr} - q_{mdl}$$

wird eine Referenzposition $q_{ref}$ genutzt, die sich analog zu dem

Referenzdrehmoment aus eine Mittelwert zuvor gemessener Positionen bestimmt:

$$q_{ref} = \frac{\sum_i q_{msr,i,eingefroren}}{nsamples}$$

Die Referenzposition ist also nicht fest, wie etwa die modellierte Position, sondern variabel. Die Nutzerwunscherkennung kann in diesem Fall analog zu (2) gebildet werden:

$$q_{delta\_ext,ref} = q_{msr} - q_{ref}$$

$$\left| q_{delta\_ext,ref} \right| > \varepsilon$$

Der Nutzerwunsch "Einfrieren" wird bevorzugt durch Ruhen des Systems erkannt, d.h. wenn der Nutzer den Manipulator für eine kurze definierte Zeitspanne (z.B. 0,5 Sekunden) in einer Position festhält:
$|\dot{q}| < \varepsilon$ für eine Zeitspanne

Tipp-Betrieb

Insbesondere in einem wie oben beschriebenen System, welches die Zustände "Gesperrt" und "Freigegeben" erkennt, kann es wünschenswert sein, das System in kleinen dosierten Schritten zu bewegen. Das Grundprinzip ist hierbei wie folgt:

1. Im gesperrten Zustand ist das System "steif" geregelt (Positionsregelung oder steife Impedanzregelung). Dabei gibt der Algorithmus die Sollposition $q_{mdl,freeze}$ vor.

2. Erkennt man kleine Abweichungen
$|\tau_{ext,ref}| > \delta$ oder $|q_{delta\_ext,ref}| > \delta$, wobei gilt $\varepsilon > \delta$,
so wird die Sollposition $q_{mdl,freeze}$ entsprechend angepasst.

Gelenkspezifische Anpassung der Sollposition $q_{mdl,freeze}$

Um die Position zu verschieben, wird um eine definierte Strecke verfahren, beispielsweise:

$$q_{mdl,freeze}^* = q_{mdl,freeze} + a * q_{delta\_ext} \quad \text{(Positionsbasiert)}$$

$$q_{mdl,freeze}^* = q_{mdl,freeze} + b * \tau_{ext} \quad \text{(Drehmomentbasiert)}$$

Die Verstärkungsparameter *a* und *b* dienen bevorzugt dazu, die Sensitivität des Manipulators an den Nutzer einzustellen.

Kartesische Anpassung der Sollposition

Der Nutzerwunsch kann auch kartesisch interpretiert werden, sofern der Nutzer den Manipulator am Endeffektor berührt hat:

$$\Delta x = a * J * q_{delta\_ext} \quad \text{(Positionsbasierte Berechnung einer kartesischen}$$

$$\text{Verschiebung)}$$

$$\Delta x = b * \left(J^T\right)^{-1} * \tau_{ext} \quad \text{(Drehmoment-Berechnung einer kartesischen Verschiebung)}$$

Das kartesische Inkrement $\Delta x$ kann nun über einen beliebigen Inverskinematikansatz (beispielsweise ein analytisches Inverskinematikverfahren) wieder in Gelenkkoordinaten umgerechnet werden:

$$q_{mdl,freeze}{}^* = q_{mdl,freeze} + J^{-1}\Delta x \quad \text{(Drehmomentbasiert)}$$

Automatische Auswahl des gelenkspezifischen oder kartesischen Modus

Normalerweise erfolgt die Bestimmung der Dynamik eines Manipulatorarms bzw. Manipulators typischerweise mittels einer Jacobi-Matrix. Die Jacobi-Matrix eines Manipulatorarms beschreibt im Allgemeinen die Abbildung von Gelenkgeschwindigkeiten auf die Lineargeschwindigkeit des TCPs ("Tool Center Points"; Referenzpunkt, der sich an geeigneter Stelle am Werkzeug befindet) und die zeitlichen Änderungen der Orientierung des Endeffektors bezogen auf ein Referenzkoordinatensystem. Es muss beachtet werden, dass die Jacobi-Matrix im Falle vieler gebräuchlicher Manipulatoren nicht-quadratisch ist und daher bevorzugt über eine Pseudoinverse berechnet wird. Aus der Pseudoinversen kann wiederum eine Konsistenzbedingung für die automatische Unterscheidung zwischen kartesischem und gelenkspezifischem Modus gewonnen werden.

Jegliche Pseudoinverse teilt die Lösung in zwei Räume: Den "Range-Space" und den "Null-Space" (N()). Zur Beurteilung, ob die Berührung - und damit der Nutzerwunsch - am Endeffektor stattgefunden hat, muss die berechnete Abweichung $\tau_{ext}$ oder $q_{delta\_ext}$ im jeweiligen Nullraum der Jacobi-Matrix liegen. Damit lässt sich das folgende Kriterium definieren:

Gilt eine der jeweiligen Beziehungen

$$\left| N(J) * q_{delta\_ext} \right| < \alpha \quad \text{(Position)}$$

oder

$$\left| N(J^T) * \tau_{ext} \right| < \alpha \quad \text{(Drehmoment)},$$

dann wird das kartesische Verfahren verwendet. Andernfalls wird das gelenkspezifische Verfahren verwendet, da die berechnete bzw. gemessene Abweichung $\tau_{ext}$ oder $q_{delta\_ext}$ nicht mit der kartesischen Welt in Einklang ist. Dabei soll $N(J)$ respektive $N(J^T)$ den jeweiligen Nullraum der (inversen) Matrix darstellen.

Alternativrealisierung ohne Nullraumbestimmung

Wurde aufgrund der Pseudoinversen die Richtung geschätzt,

$$F = \left(J^T\right)^{-1} * \tau_{ext},$$

so kann eine einfache Vorwärtsrechnung eine vergleichbare Validierung ermöglichen:

$$\tau^* = J^T * F$$

Der neu berechnete Vektor $\tau^*$ sollte sich nicht wesentlich von $\tau_{ext}$ unterscheiden. Hierdurch lässt sich als Kriterium formulieren:

$$\left| \tau^* - \tau_{ext} \right| < \alpha$$

Regelungsbetriebsarten

Die vorgenannten Gravitationskompensations-basierten Algorithmen lassen sich wie eingangs erläutert sowohl in Form von Impedanzregelung als auch mit Positionsregelung realisieren. Die Impedanzregelung resultiert erfindungsgemäß in einer verbesserten Sensitivität, da im "Freigabe"-Modus die Gelenksteifigkeit auf "NULL" gesetzt wird und sich der Manipulator somit sehr weich und feinfühlig durch den Benutzer steuern lässt.
Trotzdem funktioniert das hier beschriebene Verfahren ebenso für positionsgeregelte Manipulatoren, wenn im Freigabemodus die Sollposition $q_{mdl}$ auf die instantan gemessene Position $q_{msr}$ gesetzt wird:

$q_{mdl} = q_{msr}$

In diesem Fall wird der innere Positionsregelkreis des Manipulators gewissermaßen "aufgeschnitten"; da durch die Berührung eine Positionsdifferenz eingespeist wird, muss sich der Manipulator bewegen. Die Performance des Gesamtsystems hängt nun von den "intrinsischen" Fähigkeiten (z.B. Reibung) des Manipulators und des Positionsregelgesetzes ab. Durch entsprechende "Verstärkung" des beobachteten Fehlers $q_{delta\_ext}$ ist es möglich, die Handhabung (das "Feeling") weiter zu verbessern. Hierdurch kann das Gesamtsystem allerdings leicht instabil werden, was zusätzliche regelungstechnische Maßnahmen erfordert. Deshalb wird bevorzugt die "innere" Positionsregelung des Manipulators "weich" gemacht. Dies ist insbesondere auch für Manipulatoren interessant, welche keine Drehmomentregelung zur Verfügung stellen.
In Fig. 2 ist schematisch und beispielhaft der Ablauf eines erfindungsgemäßen Verfahrens zum Steuern eines Manipulators, bevorzugt eines Industrieroboters, dargestellt. Es versteht sich, dass das hier beschriebene Verfahren nicht auf Industrieroboter oder Gelenkarmroboter beschränkt ist, sondern sich gleichermaßen für jede Art von Manipulator eignet. In Schritt 5 ist der Manipulator gesperrt. In Schritt 10 wird ein Nutzerwunsch "Freigabe" wie oben dargelegt erkannt und daraufhin die Bewegungsfreigabe des Manipulators lokal auf den erkannten Nutzerwunsch hin erteilt. Die Freigabe kann im dargestellten Beispiel jedoch auf zwei Arten erfolgen:
Falls im Schritt 10 das Modell als gültig erkannt wird, so wird der Manipulator in Reaktion auf den Nutzerwunsch freigeschaltet (Schritt 20). Die Manipulatorsteuerung bewegt dann den Manipulator entsprechend der vom Bediener bzw. Nutzer vorgegebenen Richtung, indem die verschiedenen Aktoren des Manipulators geeignet angesteuert werden.
Falls im Schritt 10 das Modell jedoch als ungültig erkannt wird, so wird der Manipulator in Schritt 30 "zäh" freigegeben, d.h. der Manipulator fährt sehr langsam. Dieser Modus ist vor allem für eine "Crash Recovery" vorteilhaft, wenn der Manipulator beispielsweise durch andere Programme in einen Verklemmungszustand gebracht wurde. Eine solche Verklemmung kann durch eine Gravitationskompensation relativ einfach aufgehoben werden. Wird in Schritt 35 ein Nutzerwunsch "Einfrieren" erkannt, so kehrt der Manipulator in den gesperrten Zustand (Schritt 5) zurück.

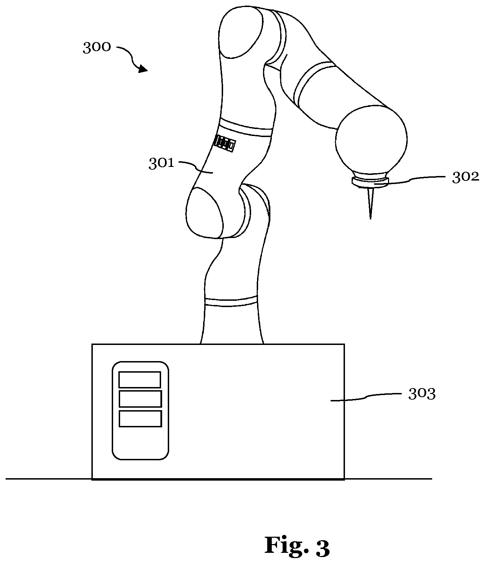

In Fig. 3 ist schematisch ein Robotersystem 300 gezeigt, welches einen Manipulator 301 umfasst, und zwar einen Gelenkarmroboter 301, der an seinem Flansch bzw. Endeffektor 302 gegriffen und manuell geführt werden kann. Das System 300 weist zudem eine Steuerungseinrichtung 303 auf. Letztere ist dabei eingerichtet, die oben detailliert beschriebenen Verfahren zum Steuern des Manipulators 301 auszuführen.

**Patentansprüche**

1. Verfahren zum Steuern eines Manipulators (301), in Form eines eines Gelenkarmroboters, aufweisend:

Erkennen (10) eines Freigabewunsches basierend auf einer Kraftausübung auf den Manipulator durch eine Bedienperson; und
Freigeben (20, 30) des Manipulators in Reaktion auf das Erkennen (10) des Freigabewunsches;
**dadurch gekennzeichnet, dass**
das Erkennen (10) des Freigabewunsches ein Überwachen des Verlaufs zumindest eines einen Zustand des Manipulators (301) charakterisierenden Messwerts und ein Auswerten einer Abweichung eines aktuellen Messwertes von einem gemittelten Messwertverlauf umfasst.

2. Verfahren nach Anspruch 1, wobei der zumindest eine einen Zustand des Manipulators (301) charakterisierende Messwert ein Drehmoment des Manipulators (301) umfasst und/oder eine Position des Manipulators umfasst.

3. Verfahren nach Anspruch 2, wobei das Erkennen (10) des Freigabewunsches ein Erkennen, dass eine Differenz zwischen einem gemessenen Drehmoment und einem Referenzdrehmoment eine vorgegebene Fehlerschranke betragsmäßig überschreitet umfasst;
wobei das Referenzdrehmoment durch einen Mittelwert von zuvor gemessenen Drehmomenten berechnet wird, oder durch einen Snapshot-Messwert gebildet wird.

**4.** Verfahren nach Anspruch 2, wobei das Erkennen (10) des Freigabewunsches ein Erkennen, dass eine Differenz zwischen einer gemessenen Position und einer Referenzposition eine vorgegebene Fehlerschranke betragsmäßig überschreitet umfasst;
wobei die Referenzposition durch einen Mittelwert von zuvor gemessenen Positionen berechnet wird, oder
wobei die Referenzposition durch einen Snapshot-Messwert gebildet wird.

**5.** Verfahren nach einem der vorangegangenen Ansprüche, wobei das Freigeben (20, 30) des Manipulators (301) ein Freigeben (20) des Manipulators mit erhöhter Steifigkeit umfasst.

**6.** Verfahren nach einem der vorangegangenen Ansprüche, weiterhin aufweisend:

Erkennen (35) eines Sperrwunsches, wenn die Bedienperson den Manipulator (301) für eine vorgegebene Zeitspanne in einer Position festhält; und
Sperren (5) des Manipulators (301) in Reaktion auf das Erkennen (35) des Sperrwunsches.

**7.** Verfahren zum Steuern eines Manipulators (301), insbesondere eines Gelenkarmroboters, aufweisend:

Erkennen (10) eines Freigabewunsches basierend auf einer Kraftausübung auf den Manipulator (301) durch eine Bedienperson; und
Bewegen, in Reaktion auf das Erkennen (10), des Manipulators (301) um eine vorgegebene Position und anschließendes Sperren des Manipulators.

**8.** Verfahren nach Anspruch 7, wobei das Bewegen des Manipulators (301) ein gelenkspezifisches oder kartesisches Anpassen einer Sollposition des Manipulators umfasst.

**9.** Verfahren nach Anspruch 8, weiterhin aufweisend:
automatisches Auswählen des kartesischen Anpassens der Sollposition des Manipulators (301) in Reaktion auf ein Erkennen, dass die Bedienperson den Manipulator (301) an einem Endeffektor berührt hat.

**10.** Verfahren nach Anspruch 9, wobei das Erkennen, dass die Bedienperson den Manipulator (301) an einem Endeffektor (302) berührt hat, ein Auswerten einer Jacobimatrix, insbesondere eine Nullraumbestimmung, umfasst.

**11.** Verfahren nach einem der vorangegangenen Ansprüche 7 bis 10,
wobei eine Bewegungssensitivität des Manipulators (301) mittels eines Verstärkungsparameters einstellbar ist.

**12.** Robotersystem (300), umfassend einen Manipulator (301), insbesondere einen Gelenkarmroboter, und eine Steuerungseinrichtung (303), welche eingerichtet ist ein Verfahren zum Steuern eines Manipulators (301) gemäß einem der voranstehenden Verfahrensansprüche auszuführen.

**Claims**

**1.** Method for controlling a manipulator (301) in the form of a jointed-arm robot comprising:

detecting (10) a release request based on a force exerted on the manipulator by an operator; and
releasing (20, 30) the manipulator in response to detecting (10) the release request;
**characterized in that**
detecting (10) the release request comprises monitoring the course of at least one measured value characterizing a state of the manipulator (301) and evaluating a deviation of a current measured value from an averaged measured value course.

**2.** Method according to claim 1, wherein the at least one measured value characterizing a state of the manipulator (301) comprises a torque of the manipulator (301) and/or comprises a position of the manipulator.

**3.** Method according to claim 2, wherein detecting (10) the release request comprises detecting that a difference between a measured torque and a reference torque exceeds a predetermined error threshold in amount;
wherein the reference torque is calculated by an average of previously measured torques, or
is formed by a snapshot measured value.

4. Method according to claim 2, wherein detecting (10) the release request comprises detecting that a difference between a measured position and a reference position exceeds a predetermined error threshold in amount; wherein the reference position is calculated by an average of previously measured positions, or wherein the reference position is formed by a snapshot measured value.

5. Method according to any of the preceding claims, wherein releasing (20, 30) the manipulator (301) comprises releasing (20) the manipulator with increased stiffness.

6. Method according to any of the preceding claims, further comprising:

   detecting (35) a lock request when the operator holds the manipulator (301) in a position for a predetermined period of time; and
   locking (5) the manipulator (301) in response to detecting (35) the lock request.

7. Method for controlling a manipulator (301), in particular a jointed-arm robot, comprising:

   detecting (10) a release request based on a force exerted on the manipulator (301) by an operator; and
   moving, in response to detecting (10), the manipulator (301) by a predetermined position and subsequently locking the manipulator.

8. Method according to claim 7, wherein moving the manipulator (301) comprises a joint-specific or cartesian adjustment of a target position of the manipulator.

9. Method according to claim 8, further comprising:
   automatically selecting the cartesian adjustment of the target position of the manipulator (301) in response to detecting that the operator has touched the manipulator (301) at an end effector.

10. Method according to claim 9, wherein detecting that the operator has touched the manipulator (301) at an end effector (302) comprises evaluating a Jacobian matrix, in particular a zero-space determination.

11. Method according to any of the preceding claims 7-10, wherein a motion sensitivity of the manipulator (301) is adjustable by means of a gain parameter.

12. Robot system (300) comprising a manipulator (301), in particular a jointed-arm robot, and a control device (303) which is set up to carry out a method for controlling a manipulator (301) according to any of the preceding method claims.

**Revendications**

1. Procédé de commande d'un manipulateur (301) en forme de robot à bras articulé, comprenant :

   la détection (10) d'un souhait de libération sur la base d'une force exercée sur le manipulateur par une personne utilisatrice ; et
   la libération (20, 30) du manipulateur en réaction à la détection (10) du souhait de libération ;
   **caractérisé en ce que**
   la détection (10) du souhait de libération inclut une surveillance de la variation au moins d'une valeur mesurée qui caractérise un état du manipulateur (301) et une analyse d'un écart d'une valeur mesurée instantanée par rapport à une variation moyenne de valeur mesurée.

2. Procédé selon la revendication 1, dans lequel la au moins une valeur mesurée qui caractérise un état du manipulateur (301) inclut un couple de rotation du manipulateur (301) et/ou inclut une position du manipulateur.

3. Procédé selon la revendication 2, dans lequel la détection (10) du souhait de libération inclut une détection qu'une différence entre le couple de rotation mesuré et un couple de rotation de référence excède en valeur une marge d'erreur prédéfinie ;
   dans lequel le couple de rotation de référence est calculé par l'intermédiaire d'une moyenne de couples de rotation calculés antérieurement, ou

est formé à partir d'une valeur d'instantané de mesure.

4.  Procédé selon la revendication 2, dans lequel la détection (10) du souhait de libération inclut une détection qu'une différence entre une position mesurée et une position de référence excède une marge d'erreur prédéfinie ;
    dans lequel la position de référence est calculée par l'intermédiaire d'une moyenne de positions mesurées antérieurement, ou
    dans lequel la position de référence est formée par l'intermédiaire d'une à partir d'une valeur d'instantané de mesure.

5.  Procédé selon l'une des revendications précédentes, dans lequel la libération (20, 30) du manipulateur (301) inclut une libération (20) du manipulateur avec une rigidité accrue.

6.  Procédé selon l'une des revendications précédentes, comprenant en outre :

    la détection (35) d'un souhait de blocage si la personne utilisatrice arrête le manipulateur (301) dans une position pendant un laps de temps prédéfini ; et
    le blocage (5) du manipulateur (301) en réaction à la détection (35) du souhait de blocage.

7.  Procédé de commande d'un manipulateur (301), en particulier d'un robot à bras articulé, comprenant :

    la détection (10) d'un souhait de libération sur la base d'une force exercée sur le manipulateur (301) par une personne utilisatrice ; et
    le déplacement, en réaction à la détection (10), du manipulateur (301) autour d'une position prédéfinie et le blocage consécutif du manipulateur.

8.  Procédé selon la revendication 7, dans lequel le déplacement du manipulateur (301) inclut une adaptation spécifique aux articulations ou une adaptation cartésienne d'une position de consigne du manipulateur.

9.  Procédé selon la revendication 8, comprenant en outre :
    une sélection automatique de l'adaptation cartésienne de la position de consigne du manipulateur (301) en réaction à une détection que la personne utilisatrice a touché le manipulateur (301) au niveau d'un effecteur terminal.

10. Procédé selon la revendication 9, dans lequel la détection que la personne utilisatrice a touché le manipulateur (301) au niveau d'un effecteur terminal (302) inclut une analyse d'une matrice de Jacobi, en particulier une détermination d'un espace nul.

11. Procédé selon l'une des revendications précédentes 7 à 10, dans lequel une sensibilité de déplacement du manipulateur (301) est ajustable au moyen d'un paramètre d'amplification.

12. Système de robot (300), comprenant un manipulateur (301), en particulier un robot à bras articulé, et un équipement de commande (303) qui est agencé pour exécuter un procédé de commande d'un manipulateur (301) selon l'une des revendications de procédé précédentes.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080245175 A1
- EP 2392435 A2
- EP 2299344 A2
- WO 2011082755 A1